# EUROPÄISCHE PATENTSCHRIFT

(11) **EP 4 599 112 B1**
(45) Veröffentlichungstag und Bekanntmachung des Hinweises auf die Patenterteilung: **19.08.2026**
(21) Anmeldenummer: 23798779.7
(22) Anmeldetag: 31.10.2023
(51) Int. Cl.: C25B 1/04, C25B 9/05, C25B 9/19, C25B 9/73, C25B 15/02, C25B 15/08

(54) **ELEKTROLYSEANLAGE MIT EINEM DRUCKELEKTROLYSEUR UND VERFAHREN ZUM BETRIEB EINER SOLCHEN ELEKTROLYSEANLAGE**
ELECTROLYSIS SYSTEM COMPRISING A PRESSURE ELECTROLYZER, AND METHOD FOR OPERATING SUCH ELECTROLYSIS SYSTEM
INSTALLATION D'ÉLECTROLYSE DOTÉE D'UN ÉLECTROLYSEUR SOUS PRESSION ET PROCÉDÉ POUR FAIRE FONCTIONNER UNE TELLE INSTALLATION D'ÉLECTROLYSE

(30) Priorität: 13.12.2022 DE 102022213507
(43) Veröffentlichungstag der Anmeldung: 13.08.2025
(73) Patentinhaber: Siemens Energy Global GmbH & Co. KG, 81739 München (DE)
(72) Erfinder: RELLER, Christian, 32425 Minden (DE); WOLF, Erik, 91341 Röttenbach (DE)
(86) Internationale Anmeldenummer: PCT/EP2023/080331
(87) Internationale Veröffentlichungsnummer: WO 2024/125882

(56) Entgegenhaltungen:
- WO-A1-2011/004344
- JP-A- 2010 121 146

## Beschreibung

Die Erfindung betrifft eine Elektrolyseanlage umfassend einen Druckelektrolyseur zur Erzeugung von Wasserstoff und Sauerstoff als Produktgase, mit einer Vielzahl von Elektrolysezellen, die jeweils zwei Halbzellen aufweisen, die durch eine ionenpermeable Membran getrennt sind, so dass ein Anodenraum und ein Kathodenraum gebildet sind. Die Erfindung betrifft weiterhin ein Verfahren zum Betrieb einer Elektrolyseanlage.

Wasserstoff wird heutzutage beispielsweise mittels Proton Exchange Membrane (PEM)-Elektrolyse oder alkalische Elektrolyse erzeugt. Die Elektrolyseure produzieren mit Hilfe elektrischer Energie Wasserstoff und Sauerstoff aus dem zugeführten Wasser.

Ein Elektrolyseur weist dabei in der Regel eine Vielzahl von Elektrolysezellen auf, welche benachbart zueinander angeordnet sind. Mittels der Wasserelektrolyse wird in den Elektrolysezellen Wasser in Wasserstoff und Sauerstoff zerlegt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig wird Wasserstoff produziert. Das Wasser wird dabei in der Regel von einer Unterseite in den Anodenraum und/oder Kathodenraum gefördert. Auch bei der alkalischen Elektrolyse ist eine Membran vorgesehen, die als semipermeable Membran oder Diaphragma ausgebildet ist, welche selektiv einen Übertritt von bestimmten Ionen erlaubt. Als Elektrolyt dient Kalilauge (Kaliumhydroxid-Lösung, KOH) mit einer Konzentration von typischerweise 20-40 %. Die gasdichte Membran, das sogenannte Diaphragma, lässt zwar den Transport von OH⁻ -Ionen zu, verhindert aber gleichzeitig die Vermischung der entstehenden Produktgase.

Anlagentechnisch findet der Elektrolyseprozess in dem so genannten Elektrolysestack, zusammengesetzt aus mehreren Elektrolysezellen, statt. In dem unter DC-Spannung stehenden Elektrolysestack wird als Edukt Wasser eingebracht, wobei nach dem Durchlauf durch die Elektrolysezellen zwei Fluidströme, bestehend aus Wasser und Gasblasen (Sauerstoff O₂ bzw. Wasserstoff H₂) austreten. Im Folgenden ist daher eine Gasabscheidung notwendig, d.h. eine Phasentrennung von Wasser und dem jeweiligen gasförmigen Produktgas in dem Phasengemisch. Hierbei ist es üblich, dass über eine Verrohrung mehrerer Elektrolysezellen und weiterhin mehrere Elektrolyseeinheiten miteinander verbunden werden und das jeweils austretende Gas-Wasser-Gemisch einem zentralen Gasabscheider zugeführt wird.

Trotz der vergleichsweisen hohen Gasdichtigkeit des der ionenpermeablen Membran, beispielsweise des Ionomers der protonenleitenden Membran bei einer PEM-Elektrolyse, findet im Betrieb eine Permeation von Sauerstoff, von der Anode zur Kathode, und von Wasserstoff, von der Kathode zur Anode, statt. Dies ist zum einen damit zu begründen, dass eine vollständige Gasundurchlässigkeit des Ionomers nicht zu erreichen ist. Zum anderen nimmt die Membran durch den direkten Kontakt mit Wasser selbst Wasser auf. Die durch die Permeation auftretenden Fremdgase verursachen unerwünschte Nebenreaktionen, die den Wirkungsgrad der Wasserelektrolyse senken und gegebenenfalls die Membran schädigen können.

Mithin befinden sich in der Praxis im Sauerstoffgasstrom kleine Mengen an Wasserstoff und im Wasserstoffgasstrom kleine Mengen an Sauerstoff. Die Quantität des jeweiligen Fremdgases hängt vom Elektrolyse-Zelldesign ab und variiert auch unter dem Einfluss von Stromdichte, Katalysatorzusammensetzung, Alterung und hängt überdies auch vom Membranmaterial der Elektrolysezelle ab. Systemimmanent ist dabei, dass im Gasstrom des einen Produktgases jeweils das andere Produktgas in sehr geringen Mengen vorliegt. Im weiteren Prozessverlauf werden in der Regel in nachgeschalteten Schritten der Gasreinigung selbst geringe Sauerstoffspuren aus dem Wasserstoff mit zum Teil sehr aufwändigen und kostenintensiven Reinigungsschritten entfernt, insbesondere wenn eine besonders hohe Produktgasqualität gefordert ist, wie dies etwa bei der Nutzung des Wasserstoffs, z.B. für Brennstoffzellen, der Fall ist. Unter Umständen kann es dabei erforderlich sein, die Fremdgaskonzentration zu reduzieren, und zwar bereits unmittelbar an bzw. direkt nach der Elektrolysezelle bzw. dem Elektrolyse-Stack, z.B. in dem Elektrolyseur nachgeschalteten Gasabscheidern oder Gas-Separatoren.

Das Problematik ist besonders relevant bei hohen Systemdrucken in Elektrolyseanlagen mit Druckelektrolyseuren und verstärkt in deren transienten Betriebsphasen, wie etwa beim Start oder Hochfahren des drucklosen Systems eines Druckelektrolyseurs, in einem Teillastbetrieb oder generell bei Lastwechseln und bei gealterten Membranen verstärkt. Dies führt zu Einschränkungen der Betriebsweise oder sogar zu einer Verhinderung eines Weiterbetriebs und zu einer vorzeitigen Sicherheitsabschaltung. Dadurch ergeben sich vor allem bei positiven Lastgradienten, etwa beim Hochfahren der Elektrolyseanlage oder bei einem Wechsel von einem Teillastbetrieb zu einem Volllastbetrieb kritische Zustände für die Membran aufgrund von Differenzdrucken über die Zelltrennung vom Anodenraum zum Kathodenraum und damit einhergehender Druckgradienten.

Andererseits ist gerade die Druckelektrolyse für großskalige industrielle Anwendungen von besonderem Interesse, ein Entwicklungstrend zu erhöhten Betriebsdrücken ist daher deutlich erkennbar. Beispielsweise bildet der Wasserelektrolyseur die Hauptkomponente in so genannten Power-to-Gas-Anlagen. Einer der wichtigsten Betriebsparameter ist in diesem Kontext der Betriebsdruck des Elektrolyseurs. Der Druckbetrieb ist zum einen mit den Anforderungen der zu bedienenden Anwendung zu begründen. Zum anderen ist eine Druckerhöhung für eine effiziente Speicherung des Wasserstoffs auf Grund des geringen spezifischen Volumens unumgänglich. Dies wird bei der Betrachtung verfügbarer PEM-Elektrolyseure oder alkalischen Elektrolyseure sowie den in den letzten Jahren durchgeführten Demonstrationsprojekten im Kontext von Power-to-Gas deutlich. Einen weiteren Vorteil stellt die mit steigendem Druckniveau reduzierte Wasseraufnahmefähigkeit des Gases dar, die zu einem geringeren Aufwand für die Gastrocknung führt. Es sind daher umfangreiche Entwicklungstätigkeiten hinsichtlich Elektrolyseanlagen mit Druckelektrolyseuren zu verzeichnen und ein Bedarf an Betriebskonzepten für Druckelektrolyseure im industriellen Maßstab.

In der Druckschrift JP 2010121146 A (offenbarend eine Elektrolyseanlage entsprechend dem Oberbegriff des Anspruchs 1) ist eine Elektrolyseanlage und ein Verfahren zum Betrieb einer Elektrolyseanlage beschrieben. Darin wird ein betriebliches Sicherheitskonzept vorgeschlagen, bei dem der Einbau von Absperrventilen in die Wasserzirkulations-, Wasserstoffextraktions- und Sauerstoffextraktionsleitungen vorgesehen ist sowie Echtzeit-Überwachungs- und Steuerungsmechanismen. Dadurch können Anomalien wie Druck- und Gaskonzentrationsabweichungen erkannt und Maßnahmen ergriffen werden, um die Vermischung und den Rückfluss von Wasserstoff und Sauerstoff zu verhindern.

Der Erfindung liegt daher die Aufgabe zugrunde eine Elektrolyseanlage mit einem Druckelektrolyseur anzugeben, die hinsichtlich Sicherheit und Anlageneffizienz einen verbesserten Betrieb ermöglicht.

Die Aufgabe wird erfindungsgemäß gelöst durch eine Elektrolyseanlage entsprechend Anspruch 1, umfassend inter alia einen Druckelektrolyseur zur Erzeugung von Wasserstoff und Sauerstoff als Produktgase bei einem Nenndruck, mit einer Vielzahl von Elektrolysezellen, die jeweils zwei Halbzellen aufweisen, die durch eine ionenpermeable Membran getrennt sind, so dass ein Anodenraum und ein Kathodenraum gebildet sind, wobei anodenseitig eine Sauerstoff-Produktleitung an den Anodenraum und kathodenseitig eine Wasserstoff-Produktleitung an den Kathodenraum angeschlossen ist, wobei die Wasserstoff-Produktleitung in einen ersten Gas-Separator und die Sauerstoff-Produktleitung in einen zweiten Gas-Separator einmündet, wobei an den Druckelektrolyseur kathodenseitig ein erster Druckgas-Speicher für Wasserstoff und anodenseitig ein zweiter Druckgas-Speicher für Sauerstoff angeschlossen ist, so dass aus den Druckgas-Speichern jeweils druckbeladenes Gas ausleitbar und kathodenseitig und anodenseitig dem Druckelektrolyseur zuführbar ist, wobei der erste Druckgas-Speicher über eine erste Entnahmeleitung und der zweite Druckgas-Speicher über eine zweite Entnahmeleitung an den Druckelektrolyseur angeschlossen ist, wobei in eine Entnahmeleitung eine ansteuerbare Regelarmatur geschaltet ist, so dass ein jeweiliger Vordruck kathodenseitig und anodenseitig einstellbar ist, und wobei eine Differenzdruckregeleinrichtung mit einem Differenzdruckaufnehmer vorgesehen ist, der an einer jeweiligen Aufnahmestelle der ersten Entnahmeleitung und der zweiten Entnahmeleitung angeschlossen ist, so dass der Differenzdruck des kathodenseitigen Vordrucks und des anodenseitigen Vordrucks ermittelbar und regelbar ist, so dass ein vorgegebener jeweiliger Vordruck kathodenseitig und anodenseitig einstellbar ist.

Die Aufgabe wird weiterhin erfindungsgemäß gelöst durch ein Verfahren zum Betrieb einer Elektrolyseanlage entsprechend Anspruch 8, bei dem inter alia in einer Startphase der Druckelektrolyseur mit druckbeladenem Gas auf einen Vordruck vorgespannt wird, wobei Wasserstoff aus dem ersten Druckgas-Speicher ausgeleitet und kathodenseitig dem Druckelektrolyseur zugeführt wird, und wobei Sauerstoff aus dem zweiten Druckgas-Speicher ausgeleitet und anodenseitig dem Druckelektrolyseur zugeführt wird, wobei ein vorgegebener jeweiliger Vordruck kathodenseitig und anodenseitig eingestellt wird.

Die in Bezug auf die Elektrolyseanlage nachstehend angeführten Vorteile und bevorzugten Ausgestaltungen lassen sich sinngemäß auf das Verfahren zum Betrieb einer Elektrolyseanlage übertragen.

Die Erfindung geht bereits von dem Befund aus, dass bei Elektrolyseanlagen mit Druckelektrolyseuren für die Wasserelektrolyse die Druckelektrolyseure turnusgemäß nach einer bestimmten Zeit bzw. vor längeren Stillstandzeiten, etwa für Service- oder Reparaturarbeiten druckentlastet werden. Bei der Wiederinbetriebnahme bzw. Neustart des drucklosen Elektrolyseanlage wird die Gasproduktion von Wasserstoff und Sauerstoff daher zum Druckaufbau auf den Systemdruck oder Nenndruck genutzt. Es hat sich herausgestellt, dass bei Druckelektrolyseuren diese Startphase sehr dynamisch sein kann. Der Teillastbereich wird daher in der Startphase möglichst schnell durchfahren, da dieser von transienten Betriebszustände mit hohen Fremdgaskonzentrationen aufgrund Gas-Permeation über die Membran geprägt ist. Die Fremdgaskonzentrationen können bei der Inbetriebnahme und dem Hochfahren des Druckelektrolyseurs sicherheitskritische Werte erreichen. Besonders die Konzentration von Wasserstoff als Fremdgas in dem mit Sauerstoff beladenen Anodenraum ist aufgrund von Wasserstoff-Permeation vom Kathodenraum über die ionenleitende Membran in den Anodenraum kritisch zu bewerten und zu überwachen. Die Fremdgaskonzentration nimmt mit zunehmender Last ab. Der Druckelektrolyseur wird deshalb mit einem sehr steilen positiven Lastgradienten hochgefahren mit einem Druckanstieg von bis zu 10% des Nenndrucks pro Sekunde und auf diese Weise den Druckelektrolyseur in der Elektrolyseanlage in Betrieb zu genommen und auf Nennleistung gebracht. Damit ist in etwa binnen 10s in der Elektrolyseanlage die maximale Gasproduktion erreicht.

Hinzu kommt, dass bei einem Druckelektrolyseur in der Startphase der Druckaufbau im zeitlichen Verlauf der Gasvolumenstromzunahme deutlich nachläuft. Dadurch stellen sich sehr starke instationäre Strömungszustände innerhalb der Elektrolysezelle wie auch in der angeschlossenen Peripherie wie z.B. den Gas-Separatoren und den Produktleitungen. Durch die instationären Strömungszustände werden starke Differenzdrücke sowie Druckgradienten über den der Elektrolysezelle, den entsprechenden Halbzellen und damit der Membran aufgeprägt. Besonders deutlich wird das während der ersten Sekunden, während denen die stark zunehmende Gasmenge eine vorgelagerte Wassersäule des Prozesswassers beschleunigen muss. Dabei wird das Gas lokal vorübergehend verdichtet, bis es durch die Wassersäule schließlich durchbricht. Dieser Vorgang wiederholt sich periodisch und ist Ursache für heftige Wechseldruckbelastung über der Elektrolysezelle und der ionenselektiven Membran. Verstärkt wird dieser Zustand des Weiteren dadurch, dass der Gasvolumenstrom kathodenseitig, d.h. auf der Wasserstoffseite, doppelt so groß ist wie anodenseitig, d.h. auf der Sauerstoffseite. Die ionenselektive Membran der Elektrolysezelle und besonders eine bereits betriebsbedingt gealterte ionenselektive Membran kann dabei irreversiblen Schaden nehmen, was zu einem Ausfall der Elektrolyse führen würde.

Mit fortschreitender Alterung, aber auch durch Defekte in der ionenleitenden Membran in einzelnen Zellen, kann diese ihre betriebsnotwendige Eigenschaft der Differenzdruckfestigkeit, verlieren. Tritt dieser Fall ein, muss die Elektrolyse kosten- und zeitaufwendig überholt werden, obwohl sie für den stationären Betrieb weiterhin nutzbar wäre. Bisherige sicherheitstechnische Konzepte mit einer einfachen Differenzdruckbegrenzung mit jeweiligen Drucksensoren sind nicht in der Lage hochdynamische Vorgänge beim Anfahren aufzulösen. Das Anlagensystem ist durch die Wassersäulen zwischen den Elektrolysezellen und den Gasvolumina in den Gas-Separatoren hydraulisch entkoppelt. Insbesondere bedeutsam ist dies für zukünftige Elektrolyseanlagen mit Druckelektrolyseuren geforderten Nenndrucken von mindestens 30 bar und weit darüber hinaus.

Die Erfindung schlägt hier vor, in eine Elektrolyseanlage mit einem Druckelektrolyseur einen jeweiligen Druckgas-Speicher für Wasserstoff und Sauerstoff zu integrieren. Hierbei wird anodenseitig der Sauerstoff Druckgas-Speicher angeschlossen und kathodenseitig der Wasserstoff-Druckgas-Speicher. Aus diesen Druckgas-Speichern kann insbesondere in der Startphase bei der Inbetriebnahme des Druckelektrolyseurs diese kathodenseitig mit Wasserstoff und anodenseitig mit Sauerstoff druckaufgeladen werden. Dabei ein jeweiliger Vordruck anodenseitig und kathodenseitig flexibel und je nach Anforderung einstellbar. Auf diese Weise ist die Elektrolyseanlage besonders vorteilhaft eingerichtet, so dass der Druckelektrolyseur vor der eigentlichen Elektrolyse, d.h. der Bestromung der Elektrolysezellen mit Elektrolysestrom, bereits auf einen Arbeitsdruck nahe des Nenndrucks vorbereitet wird. Diese Prozedur der Vorspannung mit Gas aus dem Druckgas-Speichern ist membranschonend und vermeidet die hochdynamischen Effekte bei den steilen Lastgradienten und Differenzdrücken über die Membran. Die Vorspannung kann mit einer definierten zeitlichen Druckrampe auf einen vorgegebenen Vordruck für Wasserstoff und Sauerstoff erfolgen. Die Druckgas-Speicher sind entsprechend mit Wasserstoff und Sauerstoff bevorratet und unter Druck gehalten. Speicherdrucke von bis zu 200 bar sind möglich unter Vorhaltung entsprechenden Speichervolumina für die Inbetriebnahme. Dabei sind die Druckgas-Speicher vorteilhafterweise ansteuerbar hinsichtlich der Einspeicherung bzw. der der Entnahme von Druckgas der gewünschten Mange und des gewünschten Druckniveaus.

Durch dieses neue Anlagenkonzept der Erfindung wird die Möglichkeit geschaffen, für den Betrieb der Elektrolyseanlage eine Trennung in eine Startphase mit einer Vorspannprozedur und in eine daran anschließende Lastphase mit dem eigentlichen Elektrolysebetrieb und der Bestromung des Druckelektrolyseurs vorzunehmen. In der Startphase wird der Anodenraum und der Kathodenraum beispielsweise auf einen Vordruck nahe des betrieblichen Nenndrucks gebracht und auf den eigentlichen Elektrolysebetrieb unter einem Nenndruck vorbereitet. Somit wird eine Betriebsbereitschaft für die Bestromung und den Elektrolysebetrieb hergestellt.

Mithin ist es mit der Elektrolyseanlage der Erfindung erstmals möglich und vorgesehen, die Elektrolyseanlage zunächst mit einem definierten Vordruck auf der Wasserstoffseite und/oder auf der Sauerstoffseite vorzuspannen. D.h. aus einem Druckgas-Speicher wird das entsprechende druckbehaftete Gas - Wasserstoff oder Sauerstoff - in den Druckelektrolyseur eingebracht. Erst danach findet die elektrische Lastaufnahme statt. Der nun erzeugte Gasvolumenstrom ist auf Grund des Vordrucks nur ein Bruchteil von den bisherigen Anlagenkonzepten, bei denen bei niedrigem Druck in der Lastphase die Produktgase erzeugt wurden. Überdies werden die dynamischen Belastungen der Membran nachhaltig reduziert bzw. minimiert. Einsetzbar und anpassbar ist das Anlagenkonzept und die Prozessführung einer Druckelektrolyse weitgehend technologieunabhängig, d.h. etwa vorteilhaft auf verschiedene Arten der Elektrolysen, wie etwa eine alkalische Wasserelektrolyse oder auch eine PEM-Wasserelektrolyse.

Dabei ist in erfindungsgemäßer Ausgestaltung der Elektrolyseanlage der erste Druckgas-Speicher über eine erste Entnahmeleitungen und der zweite Druckgas-Speicher über eine zweite Entnahmeleitung an den Druckelektrolyseur angeschlossen. Dadurch ist eine Trennung der Gasräume und Leitungssysteme für die Wasserstoffzufuhr und die Sauerstoffzufuhr unter dem gewünschten Vordruck erzielt. Auch ist die Festlegung und Optimierung eines jeweiligen Anschlusspunktes der ersten Entnahmeleitung und der zweiten Entnahmeleitung am Druckelektrolyseur lokal möglich und unter technischen Erwägungen wählbar, um Anodenraum und Kathodenraum entsprechend mit dem druckbeladenen Gas zu beaufschlagen und auf den Vordruck vorzuspannen.

Zusätzlich ist in erfindungsgemäßer Ausgestaltung der Elektrolyseanlage in eine Entnahmeleitung eine ansteuerbare Regelarmatur geschaltet, so dass ein jeweiliger Vordruck kathodenseitig und anodenseitig einstellbar ist. In der Startphase ist dadurch eine präzise Dosierung und Überwachung der externen Gaszufuhr des jeweiligen Druckgases - Wasserstoff oder Sauerstoff - aus dem entsprechenden externen Druckgas-Speicher in den Druckelektrolyseur erreicht. Differenzdrücke über der ionenpermeablen Membran können dadurch reduziert oder vermieden werden oder auf einen zulässigen Wert begrenzt.

Weiter ist bei der erfindungsgemäßen Elektrolyseanlage die erste Entnahmeleitung an den ersten Gas-Separator und die zweite Entnahmeleitung an den zweiten Gas-Separator angeschlossen. Ein Anschluss an den jeweiligen Gas-Separator anodenseitig und kathodenseitig ist von Vorteil, wobei dann die Entnahmeleitungen an den Gasraum des jeweiligen Gas-Separators anschließen und in diesen einmünden. Als Gasraum ist dabei der Raum zu verstehen bzw. das Volumen oberhalb der flüssigen Phase in den Gas-Separatoren aufgrund der Phasentrennung im Betrieb des Druckelektrolyseurs.

Es ist aber auch möglich und bevorzugt, dass in der Elektrolyseanlage die erste Entnahmeleitung an den Kathodenraum und die zweite Entnahmeleitung an den Anodenraum angeschlossen ist. Mit einem Anschluss an den Elektrolyse-Stack mit den Stapeln aus Elektrolysezellen, ist die Möglichkeit einer unmittelbaren und lokalen Druckbeaufschlagung von anodischen und kathodischen Halbzellen zellintern oder in der Nähe der Elektrolysezelle geschaffen. Die lokalen Druckwerte des jeweils vorgegebenen Vordrucks über der ionenleitenden Membran sind damit noch genauer einstellbar und überwachbar, insbesondere in der Startphase bei der Vorspannung mit dem jeweiligen H₂-Druckgas oder O₂-Druckgas zur Vorbereitung des Elektrolysebetriebs des Druckelektrolyseurs. Es sind dabei auch Kombinationen der Anschlüsse der Entnahmeleitungen an den Gas-Separatoren und/oder an den Anoden- bzw. Kathodenraum möglich.

Weiter ist in erfindungsgemäßer Ausgestaltung der Elektrolyseanlage eine Differenzdruckregeleinrichtung mit einem Differenzdruckaufnehmer vorgesehen, wobei der Differenzdruckaufnehmer an einer jeweiligen Aufnahmestelle der ersten Entnahmeleitung und der zweiten Entnahmeleitung angeschlossen ist, so dass der Differenzdruck des kathodenseitigen Vordrucks und des anodenseitigen Vordrucks ermittelbar und regelbar ist.

Durch diese Art der Anordnung und Ankopplung des Differenzdruckaufnehmers ist auch - je nach gewählter Anschlusstopologie - der Differenzdruck über den angeschlossen Gasräumen bzw. Volumina mittelbar oder unmittelbar überwachbar, sei es der Differenzdruck zwischen dem Anodenraum und dem Kathodenraum oder der Differenzdruck zwischen dem ersten und dem zweiten Gas-Separator. Die Differenzdruckregeleinrichtung ist dabei nicht nur in der Startphase bei der Druckbeaufschlagung mit Druckgas aus den Druckgas-Speichern, sondern auch für den an die Startphase anschließenden normalen Elektrolysebetrieb bei einer Bestromung der Elektrolysezellen und Betrieb unter einem hohen Nenndruck vorteilhaft weiter nutzbar.

Durch diese Ausgestaltung ist zugleich eine sehr genaue "in-situ" Differenzdruckbestimmung gerade auch bei hohen Systemdrucken in dem Druckelektrolyseur direkt möglich. Als in-situ Zustandsindikator ist in der Elektrolyseanlage eine direkte Differenzdruckmessung über weitere ausgewählte und repräsentative Messstellen implementiert sein. Hierzu ist die Differenzdruckregeleinrichtung vorgesehen, die den Differenzdruckaufnehmer umfasst, der derart eingerichtet ist, dass ein Differenzdruck beispielsweise zwischen dem Anodenraum und dem Kathodenraum ermittelbar ist, dessen Wert in der Differenzdruckregeleinrichtung verarbeitbar ist. Somit ist über zwei ausgewählte Aufnahmestellen - jeweils repräsentativ für den Anodenraum und den Kathodenraum - der Differenzdruckaufnehmer geschaltet, dessen Differenzdruck-Messsignal in der Differenzdruckregeleinrichtung verarbeitbar ist. Vorteilhaft greift der Differenzdruckaufnehmer an der ersten und der zweiten Entnahmeleitung ab, was eine besonders einfache Implementierung ist. Die unmittelbare Differenzdruckmessung ermöglicht eine sehr genaue und nahezu verzögerungsfreie Zustandsdiagnostik und damit sichere Betriebsführung der Elektrolyseanlage. Zur Ermittlung und Bewertung des Differenzdrucks kann die Differenzdruckregeleinrichtung zusätzlich einen Differenzdruckaufnehmer aufweisen, der unmittelbar zwischen den Halbzellen, den Differenzdruck messen kann. Diese Messung kann je nach Anforderung an unterschiedlichen Aufnahmestellen erfolgen.

Vorzugsweise ist in der Elektrolyseanlage die Differenzdruckregeleinrichtung für eine Differenzdruckbegrenzung ausgelegt ist, wobei ein maximaler Wert für den Differenzdruck eingestellt ist.

Damit ist eine besonders einfache und zugleich funktionstüchtige Differenzdruckbegrenzung zwischen Anodenraum und Kathodenraum erreicht und somit die Differenzdruckbelastung über der Membran entsprechend eines eingestellten maximalen Werts des Differenzdrucks begrenzt, wobei zugleich der Gasübertritt überwacht wird. Im Allgemeinen ist im Betrieb ein möglichst geringer Differenzdruck zu bevorzugen.

Besonders vorteilhaft ist durch die Differenzdruckbegrenzung ein sicherer Betrieb der Elektrolyseanlage möglich, da ein aktueller Differenzdruck gegenüber einem zulässigen maximalen Differenzdruck zuverlässig überwachbar und regelbar ist. Auch kann der maximale zulässige Differenzdruck in der Differenzdruckregeleinrichtung vorgegeben und eingestellt bzw. angepasst werden.

Vorzugsweise ist bei der Elektrolyseanlage am ersten Gas-Separator und am zweiten Gas-Separator ein Drucksensor angeordnet.

Zusätzlich ist dadurch eine jeweilige Druckmesseinrichtung mit einem Drucksensor zur Bestimmung eines absoluten Druckwerts an den Gas-Separatoren angeschlossen, so dass neben dem Differenzdruck auch ein absoluter Druck in der Gasphase des ersten Gas-Separators und ein absoluter Druck in der Gasphase des zweiten Gas-Separators bestimmbar ist. Über den Differenzdruckaufnehmer ist überdies der Differenzdruck zwischen den Gas-Separatoren direkt und genau bestimmbar. Die Messsignale für den Differenzdruck und die ermittelten absoluten Druckwerte in den Gas-Separatoren können in der Differenzdruckregeleinrichtung verarbeitet werden. Mit der absoluten Druckmessung ist der Vordruck in der Startphase und der Systemdruck im stationären Betrieb, d.h. der Nenndruck, über eine absolute Druckmessung im ersten Gas-Separator und im zweiten Gas-Separator ermittelbar. Die Werte sind vorteilhaft ebenfalls in die Differenzdruckregeleinrichtung einlesbar und dort verarbeitbar oder diese Funktionalität in einer übergeordneten Kontrolleinheit der Elektrolyseanlage integriert, die dann die eine Differenzdruckregeleinrichtung umfasst.

In bevorzugter Ausgestaltung der Elektrolyseanlage ist kathodenseitig eine erste Edukt-Leitung an den Kathodenraum angeschlossen und anodenseitig eine zweite Edukt-Leitung an den Anodenraum angeschlossen.

Hierdurch können beispielsweise bei einer Ausgestaltung der Elektrolyseanlage mit einem PEM-Druckelektrolyseur zwei Edukt-Kreisläufe realisiert werden. Somit zirkuliert Wasser nicht nur durch den Anodenraum, sondern auch durch den Kathodenraum. Es ist aber auch möglich, dass der PEM-Druckelektrolyseur mit nur einem anodenseitigen Kreislauf realisiert ist. Als Edukt kommt hier Wasser, insbesondere vollentsalztes Wasser, zur Durchführung einer PEM-Elektrolyse in Betracht, das über die beiden Edukt-Leitungen anodenseitig und kathodenseitig zuführbar ist.

Vorzugsweise ist in der Elektrolyseanlage die ionenpermeable Membran als eine protonendurchlässige Membran ausgestaltet, so dass eine PEM-Elektrolyse durchführbar ist.

In alternativ bevorzugter Ausgestaltung der Elektrolyseanlage ist bei dem Druckelektrolyseur die ionenpermeable Membran als ein Diaphragma ausgestaltet, welches selektiv einen Übertritt von Hydroxidionen erlaubt, so dass eine alkalische Elektrolyse durchführbar ist. Bei Ausgestaltung für eine alkalische Elektrolyse, ist als Edukt dann ein Elektrolyt, beispielsweise Kalilauge mit einer Konzentration von 20%-40% über die Edukt-Leitungen der Elektrolysezelle zuführbar. Prinzipiell können in der Elektrolyseanlage auch Kombinationen von Druckelektrolyseuren unterschiedlicher Technologie verbaut sein, die auf einer alkalischen Elektrolyse oder einer PEM-Elektrolyse basieren.

Mithin ist die Erfindung vorteilhaft anwendbar auf verschiedene Arten von Druckelektrolyseuren in einer Elektrolyseanlagen, wie etwa eine alkalische Wasser- wie auch die PEM-Elektrolyse, wobei durch die Druckgas-Speicher und die Differenzdruckregeleinrichtung mit Differenzdruckaufnehmern eine sichere Inbetriebnahme und Einstellung eines Vordrucks in der Startphase erreicht ist. Damit wird insbesondere die Gefahr eines unerwünschten Gasübertritts von einer auf die andere Seite der Elektrolysehalbzelle durch hydrodynamische Effekte und unzulässig hohe Differenzdrücke minimiert und überwacht.

Bevorzugt ist bei der Elektrolyseanlage die ionenpermeable Membran als eine protonendurchlässige Membran ausgestaltet, so dass eine PEM-Elektrolyse durchführbar ist. Im Falle einer PEM-Elektrolyse ist die protonendurchlässige Membran bevorzugt auf Basis eines gas- und flüssigkeitsdichten Fluorpolymers ausgeführt.

Im sauren oder Protonen-Austausch-Membran-Elektrolyseur (PEM-Elektrolyseur) wird destilliertes oder vollentsalztes Wasser durch elektrischen Strom in Wasserstoff und Sauerstoff aufgespalten. Er besteht aus einer protonendurchlässigen Polymermembran (engl. "proton exchange membrane" oder "polymer electrolyte membrane", kurz "PEM"). Diese ist kathodenseitig mit einer porösen Elektrode aus auf Kohlenstoff geträgertem Platin und anodenseitig mit metallischen oder als Oxidvorliegenden Edelmetallen (meist Iridium und Ruthenium) beschichtet. An diese Elektroden wird eine äußere Spannung angelegt. Üblicherweise wird auf der Anodenseite des Elektrolyseurs Wasser als Edukt zugeführt. Es können auch beide Halbzellen mit Wasser geflutet werden, oder auch nur die Kathodenseite, dies ist abhängig vom Verwendungszweck. Die katalytische Wirkung der Edelmetall-Elektrode führt zur Zersetzung des Wassers an der Anodenseite: Es entstehen Sauerstoff, freie Elektronen und positiv geladene H⁺-Ionen. Die WasserstoffIonen diffundieren durch die protonenleitende Membran auf die Kathodenseite, wo sie mit den Elektronen zu Wasserstoff als Produktgas kombinieren.

In weiter bevorzugter Ausgestaltung der Elektrolyseanlage ist die ionenpermeable Membran als ein Diaphragma ausgestaltet, welche selektiv einen Übertritt von Hydroxidionen erlaubt, so dass eine alkalische Elektrolyse durchführbar ist.

Beim alkalischen Elektrolyseur wird bei einer Gleichspannung von mindestens 1,5 Volt an der Kathode Wasserstoff und an der Anode Sauerstoff gebildet. Als Elektrolyt dient Kalilauge (Kaliumhydroxid-Lösung, KOH) mit einer Konzentration von typischerweise 20 % - 40 %. Als ionenpermeable Membran kommt eine gasdichte Membran, das sogenannte Diaphragma zum Einsatz. Dieses lässt zwar den Transport von OH⁻-Ionen zu, verhindert aber gleichzeitig die Vermischung der entstehenden Produktgase. Als Elektroden werden sogenannte "DSA-Elektroden" (Dimensionsstabile Anoden) meist Titanelektroden mit einer Rutheniumoxid-Beschichtung eingesetzt. Dies sind Streckmetalle, die mit einem Edelmetall-Katalysatoroxid - beispielsweise Ruthenium- oder Iridiumoxid - beschichtet werden. Es gibt aber auch Systeme mit Raney-Nickel-Katalysatoren in einer Gasdiffusionselektrode. Alkalische Elektrolyseure sind in großem Maßstab weltweit im Einsatz.

Somit ist es bei einem Verfahren zum Betrieb einer derartigen Elektrolyseanlage mit einem Druckelektrolyseur vorgesehen, dass in einer Startphase der Druckelektrolyseur mit druckbeladenem Gas auf einen Vordruck vorgespannt wird, wobei Wasserstoff aus dem ersten Druckgas-Speicher ausgeleitet und kathodenseitig dem Druckelektrolyseur zugeführt wird, wobei ein kathodenseitiger Vordruck eingestellt wird. Zugleich wird Sauerstoff aus dem zweiten Druckgas-Speicher ausgeleitet und anodenseitig dem Druckelektrolyseur zugeführt, wobei ein vorgegebener Vordruck anodenseitig eingestellt wird. Auf diese Weise wird in der Elektrolyseanlage der Druckelektrolyseur in der Startphase für den Druckbetrieb zunächst auf den Vordruck vorgespannt. In dieser Startphase ist die Elektrolyse bevorzugt noch nicht in Gang gesetzt, d.h. es fließt noch kein Elektrolysestrom in der Startphase.

Vorzugsweise wird bei dem Verfahren ein Differenzdruck Δp zwischen dem anodenseitigen Vordruck p₂ und dem kathodenseitigen Vordruck p₁ gemessen, wobei das Messsignal in die Differenzdruckregeleinrichtung eingelesen und mit einem Referenzwert verglichen wird.

Der Referenzwert kann ein sicherheitstechnisch relevanter maximal zulässiger Druckdifferenzwert oder ein Sollwert für einen vorgegebenen Differenzdruck sein. Es ist auch möglich, dass mehrere Referenzwerte in der Differenzdruckregeleinrichtung hinterlegt werden, die an unterschiedliche Fahrweisen insbesondere bei der Inbetriebnahme angepasst sind. Das Messsignal für den Differenzdruck wird in der Differenzdruckregeleinrichtung verarbeitet und bedarfsweise -je nach hinterlegtem Regelalgorithmus - ein Regeleingriff vorgenommen. Dies kann beispielsweise der Fall sein, um für die Startphase die vorgesehene Druckerhöhung mit einer zeitlichen Druckrampe der Vordrucke jeweils anodenseitig und kathodenseitig sicherzustellen.

In dem Verfahren wird bevorzugt Wasserstoff aus dem ersten Druckgas-Speicher dem ersten Gas-Separator und Sauerstoff aus dem zweiten Druckgas-Speicher dem zweiten Gas-Separator zugeführt. Eine Druckbeaufschlagung der Gasräume der Gas-Separatoren ist besonders einfach möglich, um den Systemdruck in der Startphase zu erhöhen.

Eine Beaufschlagung des Elektrolyse-Stacks in die Halbzellen des Anodenraums und des Kathodenraums ist prinzipiell ebenfalls möglich, als alternative oder zusätzliche Maßnahme zu der Gaszufuhr in die Gas-Separatoren.

In einer besonders bevorzugten Ausgestaltung des Verfahrens wird der kathodenseitige Vordruck des Wasserstoffs gleich dem anodenseitigen Vordruck des Sauerstoffs eingestellt.

Diese Fahrweise bei der Druckbeaufschlagung in der Startphase und ggf. in dem Normalbetrieb würde einem Differenzdruck von Null oder von nahezu Null über der ionenselektiven Membran entsprechen. Dadurch ergibt sich eine besonders materialschonende Fahrweise.

Es ist vorzugweise auch möglich, dass der kathodenseitige Vordruck des Wasserstoffs größer als der anodenseitige Vordruck des Sauerstoffs eingestellt wird.

Hier können beispielsweise Druckdifferenzen der Vordrucke von einigen 10 mbar bis etwa 500 mbar vorteilhaft sein, je nach spezifischem Anlagendesign und den hydrostatischen Gegebenheiten im Behälteraufbau und der Lage der entsprechenden wasserführenden Systeme und Komponenten.

In dem Verfahren wird bevorzugt erst nach Erreichen des jeweiligen Vordrucks in dem Druckelektrolyseur der Elektrolysestrom eingeschaltet, wobei Wasserstoff und Sauerstoff als Produktgase erzeugt werden, wobei eine Druckelektrolyse bei einem Nenndruck durchgeführt wird.

Der Elektrolysestrom wird somit vorteilhafterweise erst nach der Startphase und der Druckbeaufschlagung auf den vorgegebenen anodenseitigen und kathodenseitigen Vordruck eingeschaltet. Der Nenndruck bei der dann durchgeführten Druckelektrolyse ist typischerweise größer als 30 bar und kann bis zu 100 bar und mehr betragen. Typischerweise sind Nenndrucke von 35 bar bis 80 bar bevorzugt.

Vorzugsweise wird die Druckelektrolyse vorzugsweise bei einem Nenndruck von mindestens 30 bar durchgeführt.

Der Vordruck, der jeweils anodenseitig und kathodenseitig eingestellt wird, kann dabei zwischen 1% und 99% des Nenndrucks betragen. Aus energetischen Gründen und für eine stabilen Betriebswechsel zu der Elektrolyse nach der Startphase kann der Vordruck bereits nahezu dem Nenndruck entsprechen, oder nur geringfügig geringer sein als der Nenndruck, beispielsweise kann die Druckbeaufschlagung zwischen 90% und 99% des Nenndrucks eingestellt werden.

Ausführungsbeispiele der Erfindung werden anhand einer Zeichnung näher erläutert. Hierin zeigen schematisch und stark vereinfacht die
- FIG: eine Elektrolyseanlage mit einem Druckelektrolyseur gemäß der Erfindung.

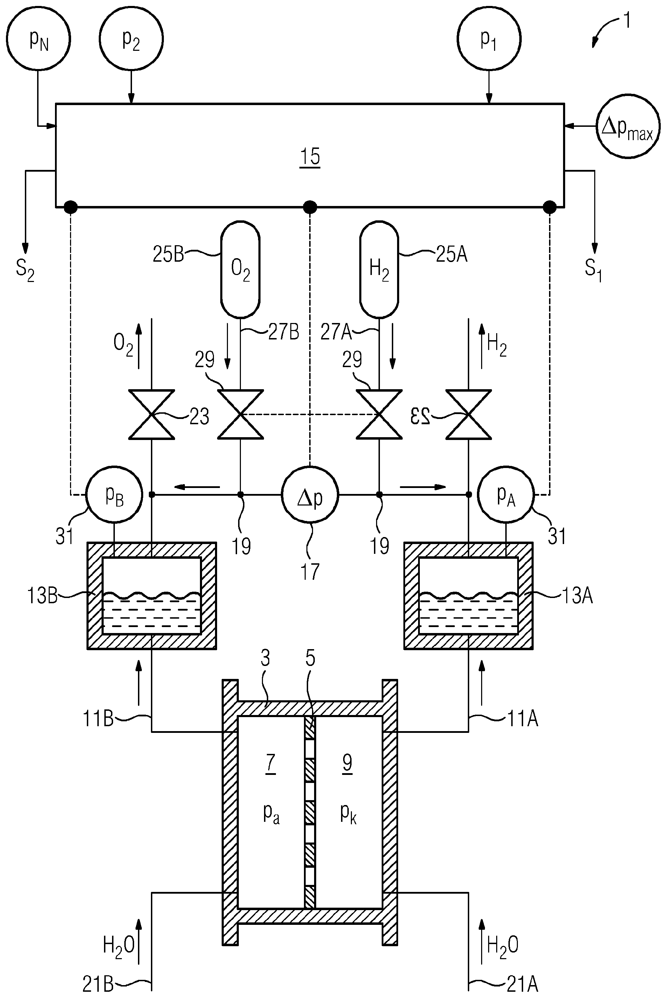

In der einzigen FIG ist eine Elektrolyseanlage 1 in einem stark vereinfachten Ausschnitt von Anlagenteilen und Komponenten dargestellt. Die Elektrolyseanlage 1 weist einen Druckelektrolyseur 3 auf, der wahlweise als ein PEM-Elektrolyseur oder als ein Alkali-Elektrolyseur ausgeführt und auf einen hohen Nenndruck p_{N} von mindestens 25 bar als Arbeitsdruck ausgelegt ist.

Der Elektrolyseur 3 umfasst einen Kathodenraum 9 und einen Anodenraum 7, die durch eine ionenpermeable Membran 5 getrennt sind. Der Anodenraum 9 und der Kathodenraum 7 ist jeweils durch eine Vielzahl von in der FIG nicht näher dargestellten in einer axialen Richtung gestapelten jeweiligen anodischen bzw. kathodischen Halbzellen zusammengesetzt und gebildet. Die kathodischen Halbzellen und die anodischen Halbzellen sind zu jeweiligen Elektrolysezelle zusammengesetzt und jeweils durch eine ionenleitende Membran 5 getrennt. In der FIG ist mithin ein vertikal ausgerichteter Druckelektrolyseur 3 gezeigt, der zur elektrochemischen Spaltung von Wasser H₂O oder eines Elektrolyten als Edukt in Wasserstoff H₂ und Sauerstoff O₂ als Produktgase mittels elektrischen Stroms konzipiert ist. Im Falle einer sauren Elektrolyse kommt vollentsalztes Wasser H₂O als Edukt zum Einsatz. Im Falle einer alkalischen Elektrolyse findet eine Lauge Verwendung, beispielsweise Kaliumhydroxid KOH in einer wässrigen Lösung mit einer Konzentration von typischerweise 20% bis 40%. Mehrere solcher Elektrolysezellen können in horizontal gestapelte so genannte Elektrolyse-Stacks hintereinandergeschaltet sein.

Im gezeigten Ausführungsbeispiel der FIG ist in der Elektrolyseanlage 1 der Druckelektrolyseur 3 als ein PEM-Elektrolyseur für hohe Nenndrucke p_{N} ausgeführt. Jede Elektrolysezelle weist hierbei eine protonendurchlässige Membran 5 auf Basis eines Fluorpolymers auf, an der auf beiden Seiten eine jeweilige Elektrode - eine Anode und eine Kathode - anliegt, über welche im Betrieb eine äußere Gleichspannung angelegt wird. Kathodenseitig ist eine erste Edukt-Leitung 21A zum Zuführen von Wasser H₂O zu dem Kathodenraum 9 vorgesehen. Anodenseitig ist eine zweite Edukt-leitung 21B zum Zuführen von Wasser H₂O an den Anodenraum 7 angeschlossen. Hierdurch sind in dem als PEM-Elektrolyseur ausgestalteten Druckelektrolyseur 3 zwei Wasserkreisläufe realisiert. Somit zirkuliert Wasser H₂O nicht nur durch den Anodenraum 7, sondern auch durch den Kathodenraum 5. Es ist aber auch möglich, dass der Druckelektrolyseur 3 mit nur einem anodenseitigen Kreislauf realisiert ist.

Im Betrieb der Elektrolyseanlage 1 wird der aus dem Anodenraum 7 in der Elektrolysezelle erzeugte Sauerstoff O₂ über eine Sauerstoff-Produktleitung 11B abgeführt. Kathodenseitig ist eine Wasserstoff-Produktleitung 11A zum Abführen des erzeugten Wasserstoffs H₂ aus einem Kathodenraum 5 vorgesehen.

Zur jeweiligen Phasentrennung des Phasengemischs aus dem jeweiligen Produktgas und Wasser ist ein erster Gas-Separator 13A der Wasserstoff-Produktleitung 11A nachgeschaltet. Entsprechend ist ein zweiter Gas-Separator 13B der Sauerstoff-Produktleitung 11B nachgeschaltet. Somit kann im Betrieb eine Phasentrennung erzielt werden derart, dass im oberen Bereich der Gas-Separatoren 11A, 11B ein Gasraum mit der Gasphase vorliegt, wohingegen die flüssige Phase am Boden der Gas-Separatoren 11A, 11B vorliegt, d.h. auf einem gewissen Wasserniveau oder Füllstands-Level. Die derart vom Wasser phasengetrennten Produktgase Wasserstoff H₂ und Sauerstoff O₂ werden über eine von dem entsprechenden Gas-Separator 11A, 11B abgehende Wasserstoff-Produktleitung 11A bzw. Sauerstoff-Produktleitung 11B abgeleitet und in nachfolgenden Prozessen weiterverarbeitet. So wird beispielsweise der Wasserstoff H₂ in einer Gasreinigung gereinigt und für weitere Zwecke komprimiert. Zur Regelung der Entnahme der Produktgase Wasserstoff H₂ und Sauerstoff O₂ ist in die abgehenden ProduktLeitungen 11A, 11B jeweils ein Ventil 23 eingebaut.

Ein erster im Betrieb mit Wasserstoff H₂ unter hohem Druck gefüllter separater Druckgas-Speicher 25A ist kathodenseitig über eine erste Entnahmeleitung 27A mit dem ersten Gas-Separator 13A verbunden. Entsprechend ist ein zweiter im Betrieb mit Sauerstoff unter hohem Druck gefüllter separater Druckgas-Speicher 25B vorgesehen, der kathodenseitig über eine zweite Entnahmeleitung 27B mit dem zweiten Gas-Separator 13B verbunden ist. Dabei ist in die Entnahmeleitungen 27A, 27B jeweils eine ansteuerbare Regelarmatur 29 geschaltet, so dass bei einer Entnahme von Gas aus den Druckgas-Speichern 25A, 25B der Durchfluss (Volumen oder Massenstrom) und das Druckniveau einstellbar ist.

Die Elektrolyseanlage 1 weist eine Differenzdruckregeleinrichtung 15 auf, die einen Differenzdruckaufnehmer 17 umfasst. So ist über die Gasräume ein Differenzdruckaufnehmer 17 geschaltet, der an einer jeweiligen Aufnahmestelle 19 an der ersten Entnahmeleitung 27A und an der zweiten Entnahmeleitung 27B abgreift. Zusätzlich ist eine jeweilige Druckmesseinrichtung 31 zur Bestimmung eines absoluten Druckwerts an die Gas-Separatoren 13A, 13B angeschlossen, so dass neben dem Differenzdruck Δp bzgl. der Gase in den Entnahmeleitungen 27A, 27B auch ein absoluter Druck p_{A} in der Gasphase des ersten Gas-Separators 13A und ein absoluter Druck p_{B} in der Gasphase des zweiten Gas-Separators 13B bestimmbar ist. Mittelbar ist auch eine Bestimmung des Differenzdrucks zwischen dem Anodenraum 7 und im Kathodenraum 5 durchführbar. Es kann dazu auch vorgesehen sein, dass ein weiterer - in der FIG nicht gezeigter - Differenzdruckaufnehmer 17 eingebaut ist, der über den Anodenraum 7 und dem Kathodenraum 5 abgreift, so dass auch ein Wert für den Differenzdruck Δp zwischen dem Kathodenraum 9 und dem Anodenraum 7 direkt bestimmbar ist.

Die Messsignale für den Differenzdruck und die Druckwerte p_{A} und p_{B} in den Gas-Separatoren 13A, 13B werden in der Differenzdruckregeleinrichtung 15 verarbeitet. Als Eingabegröße für die Differenzdruckregeleinrichtung ist ein maximaler Differenzdruck Δpₘₐₓ hinterlegt, einlesbar oder einstellbar. Dieser Wert für den maximalen Differenzdruck Δpₘₐₓ ist bei Bedarf anpassbar an die jeweiligen ausgewählten oder typischen Betriebsbedingungen des Druckelektrolyseurs 3 und den Alterungszustand der ionenpermeablen Membran 5. Weitere einstellbare Sollwerte sind neben dem Nenndruck p_{N} des Druckelektrolyseurs 3 auch der vorgegebene Vordruck p₁ für den Wasserstoff H₂ aus dem Druckgas-Speicher 25A sowie der Vordruck p₂ für den Sauerstoff O₂ aus dem Druckgas-Speicher 25B. Die Differenzdruckregeleinrichtung 15 ist für die Ausgabe von Steuersignalen S₁, S₂ eingerichtet, die an ein nicht näher dargestelltes übergeordnetes Kontrollsystem der Elektrolyseanlage 1 übergeben werden können. Damit können die physikalischen Betriebsparameter der Elektrolyseanlage 1 wie etwa der Elektrolysestrom, die Elektrolysestromdichte, die Edukt-Volumenströme, der Systemdruck oder der Differenzdruck Δp < Δpₘₐₓ sowie die jeweiligen Volumenströme über die Entnahmeleitungen 27A 27B eingestellt und angepasst werden. Letzteres erfolgt über einen Regeleingriff an den Regelarmatur 29.

Dadurch ist ein Anlagenkonzept realisiert, mit dem bei der Inbetriebnahme der Elektrolyseanlage 1 in der Startphase zunächst dem Druckelektrolyseur 3 kathodenseitig Wasserstoff H₂ unter dem Vordruck p₁ und kathodenseitig Sauerstoff O₂ unter einem Vordruck p₂ zugeführt werden kann. Mithin wird der Druckelektrolyseur 3 in der Startphase zunächst auf einen Vordruck vorgespannt, wobei ein vorgegebener jeweiliger Vordruck p₁, p₂ kathodenseitig bzw. anodenseitig eingestellt wird. In dieser Startphase findet noch keine Elektrolyse statt, d.h. die Elektrolysezellen werden nicht mit Elektrolysestrom bestromt, so dass auch noch keine Produktgase gebildet werden. Ein Betriebsmodus bei dem der kathodenseitige Vordruck p₁ größer als der anodenseitige Vordruck p₂ gewählt und eingestellt ist, kann je nach Bauform der Elektrolysezellen und der Materialien bevorzugt sein. Die eingestellten Vordrucke p₁, p₂ sind kleiner gewählt als der betriebliche Nenndruck p_{N} des Druckelektrolyseurs 3 bei der Elektrolyse. Die Werte für die Vordrucke p₁, p₂ sind flexibel anpassbar an die jeweiligen Anforderungen und im Bereich zwischen 1 % und 99% einstellbar. Aus energetischen und auch hydrodynamischen Gründen ist die Einstellung hoher Vordrucke p₁, p₂ nahe bei dem Nenndruck p_{N} des Druckelektrolyseurs 3 zu bevorzugen, also eine Vorspannung auf größer als 90% des Nenndrucks p_{N}. Dann ist bei einer Bestromung der Elektrolysezellen nach der Startphase und dem Druckaufbau der Gasvolumenstrom des erzeugten Wasserstoffs H₂ und des Sauerstoffs O₂ durch das bereits vorgehaltene hohe Druckniveau deutlich geringer als ohne die Vorspannung durch die in den Druckelektrolyseur 3 eingeleiteten Druckgase. Im normalen Betriebsmodus nach der Startphase sind bei dem Druckelektrolyseur 3 Nenndrucke p_{N} von größer als 30 bar bis zu 200 bar, typischerweise zwischen 35 bar und 80 bar möglich. Über die Drucksensoren 31 kann insbesondere in der Startphase der Gasphasendruck in den Gas-Separatoren 13A, 13B gemessen und verarbeitet werden. Dabei wird ein Soll-/Ist Vergleich des Messwerts mit dem vorgegebenen kathodenseitigen Vordruck p₁ und dem anodenseitigen Vordruck p₂ vorgenommen. Auf diese Weise ist bei der Inbetriebnahme der Elektrolyseanlage 1 die eingestellte Druckrampe bei der Druckbeaufschlagung des Druckelektrolyseurs 3 mit Wasserstoff H₂ und Sauerstoff O₂ aus den Druckgas-Speichern 25A, 25B insbesondere in der Startphase regelbar. In der Startphase können darüber hinaus die absoluten Druckwerte p_{A}, p_{B} in den Gasphasen des ersten Gas-Separators 13A und des zweiten Gas-Separators 13B über eine jeweils eingebrachte Druckmesseinrichtung 31 ermittelt und den Vordrucken p₁, p₂ gemäß der gewählten Druckrampe verglichen werden. In dem sich an die Startphase anschließenden Druckelektrolysebetrieb dient diese Ausgestaltung zusätzlich der sicherheitstechnischen Überwachung und Regelung und ggf. Korrektur und Anpassung der Druckzustände über der ionenselektiven Membran 5.

Die Differenzdruckregeleinrichtung 15 kann dabei auch als Bestandteil des übergeordneten - nicht näher dargestellten - Kontroll- oder Leittechniksystems der Elektrolyseanlage 1 konzipiert und in dieses integriert sein. Das Kontrollsystem ist mithin zum Steuern des Betriebs des Elektrolyse-Stacks im Druckelektrolyseur 3 ausgelegt. Mit Hilfe des Kontrollsystems kann beispielsweise im Anodenraum 7 ein vorgebbarer absoluter Druck pₐ als Sollwert eingestellt werden und im Kathodenraum 9 ein vorgebbarer absoluter Druck pₖ als Sollwert, wobei z.B. auch ein Betrieb möglich ist, bei dem bedarfsweise der anodenseitige Druck pₐ größer eingestellt ist als der Druck pₖ im Kathodenraum 9. Entsprechende Drucksensoren sind dann mit dem Anodenraum 7 und dem Kathodenraum 9 verbunden oder darin eingebracht zur Ermittlung des absoluten Drucks pₖ im Kathodenraum 9 und des Drucks pₐ im Anodenraum 7. Auf diese Weise werden die möglichen negativen Folgen eines Membranschadens im Betrieb eines Druckelektrolyseurs 3 minimiert, da bei einem Durchbruch der ionenpermeablen Membran 5 weniger Wasserstoff durch die Membran von dem Kathodenraum 9 in den Anodenraum 7 migriert. Hierdurch ist eine Notlaufeigenschaft bei der Druckelektrolyse erzielt, bis zu einer planbaren Revision und Wartung.

Nach der Vorspannung des Druckelektrolyseurs 3 mit dem gewünschten Vordruck p₁, p₂ in der Startphase wird der Elektrolysebetrieb gestartet. Im Betrieb der Elektrolyseanlage 1 wird Edukt-Wasser H₂O über die Edukt-Leitungen 21A, 21B dem Druckelektrolyseur 3 zugeführt und Wasserstoff H₂ und Sauerstoff O₂ werden als Produktgase erzeugt. Mit dem Differenzdruckaufnehmer 17 kann nun auch im Elektrolysebetrieb ein Differenzdruck Δp zwischen dem ersten Gas-Separator 13A und dem zweiten Gas-Separator 13B über die Abnahmestellen 19 an den Entnahmeleitungen 27A, 27B gemessen werden. Das Messsignal wird in die Differenzdruckregeleinrichtung 15 eingelesen und mit dem Referenzwert Δpₘₐₓ verglichen. Wenn der Differenzdruck Δp kleiner als ein maximal zulässiger Referenzwert Δpₘₐₓ ist, so wird ein Druckelektrolysebetrieb fortgesetzt.

Bei einem Differenzdruck Δp größer als der Referenzwert Δpₘₐₓ wird durch die Differenzdruckregeleinrichtung 15 ein Abschaltbetriebsmodus eingeleitet. Dies kann auch in der übergeordneten Kontroll- und Leittechnikeinheit erfolgen, indem von der Differenzdruckregeleinrichtung 15 entsprechende Steuersignale S₁, S₂ an eine übergeordnete Kontrolleinheit übergeben werden.

Insbesondere aufgrund der präziseren Differenzdruckmessung können auch Druckelektrolyseure 3 mit einem hohen Systemdruck von mindestens 30 bar zuverlässig und präzise angefahren und in den Elektrolysebetrieb bei Nenndruck p_{N} gebracht werden. Bei einem Neustart bzw. Anfahren des drucklosen Systems wird nicht die Elektrolyse angeschaltet und zur Gasproduktion und dem Druckaufbau auf den Nenndruck p_{N} herangezogen, sondern der Druckelektrolyseur 3 bzgl. der Elektrolyse stromlos gehalten und zunächst auf einen Vordruck p₁, p₂ vorgespannt.

## Patentansprüche

1. Elektrolyseanlage (1) umfassend einen Druckelektrolyseur (3) zur Erzeugung von Wasserstoff (H₂) und Sauerstoff (O₂) als Produktgase bei einem Nenndruck (P_{N}), mit einer Vielzahl von Elektrolysezellen, die jeweils zwei Halbzellen aufweisen, die durch eine ionenpermeable Membran (5) getrennt sind, so dass ein Anodenraum (7) und ein Kathodenraum (9) gebildet sind, wobei anodenseitig eine Sauerstoff-Produktleitung (11B) an den Anodenraum (7) und kathodenseitig eine Wasserstoff-Produktleitung (11A) an den Kathodenraum (9) angeschlossen ist, wobei die Wasserstoff-Produktleitung (11A) in einen ersten Gas-Separator (13A) und die Sauerstoff-Produktleitung (11B) in einen zweiten Gas-Separator (13B) einmündet,
**dadurch gekennzeichnet, dass**:
an den Druckelektrolyseur (3) kathodenseitig ein erster Druckgas-Speicher (25A) für Wasserstoff (H₂) und anodenseitig ein zweiter Druckgas-Speicher (25B) für Sauerstoff (O₂) angeschlossen ist, so dass aus den Druckgas-Speichern (25A, 25B) jeweils druckbeladenes Gas ausleitbar und kathodenseitig und anodenseitig dem Druckelektrolyseur (3) zuführbar ist,
wobei die erste Entnahmeleitung (27A) an den ersten Gasseparator (13A) und die zweite Entnahmeleitung (27B) an den zweiten Gas-Separator (13B) angeschlossen ist, und wobei der erste Druckgas-Speicher (25A) über eine erste Entnahmeleitung (27A) und der zweite Druckgas-Speicher (25B) über eine zweite Entnahmeleitung (27B) an den Druckelektrolyseur (3) angeschlossen ist, wobei in eine Entnahmeleitung (27A, 27B) eine ansteuerbare Regelarmatur (29) geschaltet ist, so dass ein jeweiliger Vordruck (p₁, p₂) kathodenseitig und anodenseitig einstellbar ist, und wobei eine Differenzdruckregeleinrichtung (15) mit einem Differenzdruckaufnehmer (17) vorgesehen ist, der an einer jeweiligen Aufnahmestelle (19) der ersten Entnahmeleitung (27A) und der zweiten Entnahmeleitung (27B) angeschlossen ist, so dass der Differenzdruck (Δp) des kathodenseitigen Vordrucks (p₁) und des anodenseitigen Vordrucks (p₂) ermittelbar und regelbar ist, so dass ein vorgegebener jeweiliger Vordruck (p₁, p₂) kathodenseitig und anodenseitig einstellbar ist.

2. Elektrolyseanlage (1) nach Anspruch 1, bei der die erste Entnahmeleitung (27A) an den Kathodenraum (9) und die zweite Entnahmeleitung (27B) an den Anodenraum (7) angeschlossen ist.

3. Elektrolyseanlage (1) nach Anspruch 1 oder 2, bei der die Differenzdruckregeleinrichtung (15) für eine Differenzdruckbegrenzung ausgelegt ist, wobei ein maximaler Wert für den Differenzdruck (Δpₘₐₓ) eingestellt ist.

4. Elektrolyseanlage (1) nach einem der vorhergehenden Ansprüche, bei der am ersten Gas-Separator (13A) und am zweiten Gas-Separator (13B) ein Drucksensor (31) angeordnet ist.

5. Elektrolyseanlage (1) nach einem der vorhergehenden Ansprüche, bei der kathodenseitig eine erste Edukt-Leitung (21A) an den Kathodenraum (9) angeschlossen ist und anodenseitig eine zweite Edukt-Leitung (21B) an den Anodenraum (7) angeschlossen ist.

6. Elektrolyseanlage (1) nach einem der vorhergehenden Ansprüche, wobei die ionenpermeable Membran (5) als eine protonendurchlässige Membran ausgestaltet ist, so dass eine PEM-Elektrolyse durchführbar ist.

7. Elektrolyseanlage (1) nach einem der vorhergehenden Ansprüche, bei der die ionenpermeable Membran (5) als ein Diaphragma ausgestaltet ist, welches selektiv einen Übertritt von Hydroxidionen erlaubt, so dass eine alkalische Elektrolyse durchführbar ist.

8. Verfahren zum Betrieb einer Elektrolyseanlage (1) nach einem der vorhergehenden Ansprüche, bei dem in einer Startphase der Druckelektrolyseur (3) mit druckbeladenem Gas auf einen Vordruck vorgespannt wird, wobei Wasserstoff (H₂) aus dem ersten Druckgas-Speicher (25A) ausgeleitet und kathodenseitig dem Druckelektrolyseur (3) zugeführt wird, und wobei Sauerstoff (O₂) aus dem zweiten Druckgas-Speicher (25B) ausgeleitet und anodenseitig dem Druckelektrolyseur (3) zugeführt wird, wobei ein vorgegebener jeweiliger Vordruck (p₁, p₂) kathodenseitig und anodenseitig eingestellt wird.

9. Verfahren nach einem der Ansprüche 8, bei dem ein Differenzdruck (Δp) zwischen dem anodenseitigen Vordruck (p₂) und dem kathodenseitigen Vordruck (p₁) gemessen wird, wobei das Messsignal in die Differenzdruckregeleinrichtung (15) eingelesen und mit einem Referenzwert (Δpₘₐₓ) verglichen wird.

10. Verfahren nach Anspruch 8 oder 9, bei dem Wasserstoff (H₂) aus dem ersten Druckgas-Speicher (25A) dem ersten Gas-Separator (13A) und Sauerstoff (O₂) aus dem zweiten Druckgas-Speicher (25B) dem zweiten Gas-Separator (13B) zugeführt wird.

11. Verfahren nach Anspruch 8, 9 oder 10, bei dem der kathodenseitige Vordruck (p₁) des Wasserstoffs (H₂) gleich dem anodenseitigen Vordruck (p₂) des Sauerstoffs (O₂) eingestellt wird.

12. Verfahren nach Anspruch 8, 9 oder 10, bei dem der kathodenseitige Vordruck (p₁) des Wasserstoffs (H₂) größer als der anodenseitige Vordruck (p₂) des Sauerstoffs (O₂) eingestellt wird.

13. Verfahren nach Anspruch einem der Ansprüche 8 bis 12, bei dem nach Erreichen des jeweiligen Vordrucks (p₁, p₂) in dem Druckelektrolyseur (3) der Elektrolysestrom eingeschaltet wird, wobei Wasserstoff (H₂) und Sauerstoff (O₂) als Produktgase erzeugt werden, wobei eine Druckelektrolyse bei einem Nenndruck (p_{N}) durchgeführt wird.

14. Verfahren nach Anspruch 13, wobei eine Druckelektrolyse mit einem Nenndruck (p_{N}) von mindestens 30 bar durchgeführt wird.

## Claims

1. An electrolysis plant (1) comprising a pressure electrolyser (3) for generating hydrogen (H₂) and oxygen (O₂) as product gases at a nominal pressure (P_{N}) with a plurality of electrolysis cells, each of which has two half-cells which are separated by an ion-permeable membrane (5), such that an anode chamber (7) and a cathode chamber (9) are formed, wherein an oxygen product line (11B) is connected to the anode chamber (7) on the anode side, and a hydrogen product line (11A) is connected to the cathode chamber (9) on the cathode side, wherein the hydrogen product line (11A) opens into a first gas separator (13A) and the oxygen product line (11B) opens into a second gas separator (13B), **characterised in that**:
a first compressed-gas reservoir (25A) for hydrogen (H₂) is connected on the cathode side and a second compressed-gas reservoir (25B) for oxygen (O₂) is connected on the anode side to the pressure electrolyser (3), such that pressure-loaded gas is able to be discharged from each of the compressed-gas reservoirs (25A, 25B) and is able to be supplied to the pressure electrolyser (3) on the cathode side and on the anode side, wherein the first discharge line (27A) is connected to the first gas separator (13A), and the second discharge line (27B) is connected to the second gas separator (13B), and wherein the first compressed-gas reservoir (25A) is connected via a first discharge line (27A) and the second compressed-gas reservoir (25B) is connected via a second discharge line (27B) to the pressure electrolyser (3), wherein a controllable regulating valve (29) is connected in one discharge line (27A, 27B), such that a respective inlet pressure (p₁, p₂) is adjustable on the cathode side and the anode side, and wherein a differential pressure regulator (15) comprising a differential pressure sensor (17) is provided, which is connected to the first discharge line (27A) and the second discharge line (27B) at a respective sensor location (19), such that the differential pressure (Δp) of the inlet pressure (p₁) on the cathode side and the inlet pressure (p₂) on the anode side is determinable and regulatable such that a respective specified inlet pressure (p₁, p₂) is adjustable on the cathode and anode sides.

2. The electrolysis plant (1) according to claim 1, wherein the first discharge line (27A) is connected to the cathode chamber (9), and the second discharge line (27B) is connected to the anode chamber (7).

3. The electrolysis plant (1) according to claim 1 or 2, wherein the differential pressure regulator (15) is configured to limit the differential pressure, wherein a maximum value for the differential pressure (Δpₘₐₓ) is set.

4. The electrolysis plant (1) according to any one of the preceding claims, wherein a pressure sensor (31) is arranged on the first gas separator (13A) and the second gas separator (13B).

5. The electrolysis plant (1) according to any one of the preceding claims, wherein a first reactant line (21A) is connected to the cathode chamber (9) on the cathode side, and a second reactant line (21B) is connected to the anode chamber (7) on the anode side.

6. The electrolysis plant (1) according to any one of the preceding claims, wherein the ion-permeable membrane (5) is designed as a proton-permeable membrane such that PEM electrolysis is feasible.

7. The electrolysis plant (1) according to any one of the preceding claims, wherein the ion-permeable membrane (5) is designed as a diaphragm selectively allowing hydroxide ions to pass, such that alkaline electrolysis is feasible.

8. A method for operating an electrolysis plant (1) according to any one of the preceding claims, wherein in a starting phase, the pressure electrolyser (3) is preloaded with pressure-loaded gas to an inlet pressure, wherein hydrogen (H₂) is discharged from the first compressed-gas reservoir (25A) and supplied to the pressure electrolyser (3) on the cathode side, and wherein oxygen (O₂) is discharged from the second compressed-gas reservoir (25B) and supplied to the pressure electrolyser (3) on the anode side, wherein a respective specified inlet pressure (p₁, p₂) is set on the cathode side and on the anode side.

9. The method according to claim 8, wherein a differential pressure (Δp) between the inlet pressure (p₂) on the anode side and the inlet pressure (p₁) on the cathode side is measured, wherein the measurement signal is read into the differential pressure regulator (15) and compared to a reference value (Δpₘₐₓ).

10. The method according to claim 8 or 9, wherein hydrogen (H₂) from the first compressed-gas reservoir (25A) is supplied to the first gas separator (13A), and oxygen (O₂) from the second compressed-gas reservoir (25B) is supplied to the second gas separator (13B).

11. The method according to claim 8, 9, or 10, wherein the inlet pressure (p₁) of the hydrogen (H₂) on the cathode side is set to be equal to the inlet pressure (p₂) of the oxygen (O₂) on the anode side.

12. The method according to claim 8, 9, or 10, wherein the inlet pressure (p₁) of the hydrogen (H₂) on the cathode side is set to be greater than the inlet pressure (p₂) of the oxygen (O₂) on the anode side.

13. The method according to any one of claims 8 to 12, wherein the electrolysis current is switched on in the pressure electrolyser (3) after the respective inlet pressure (p₁, p₂) has been reached, wherein hydrogen (H₂) and oxygen (O₂) are generated as product gases, wherein a pressure electrolysis is performed at a nominal pressure (p_{N}).

14. The method according to claim 13, wherein a pressure electrolysis is performed at a nominal pressure (p_{N}) of at least 30 bar.

## Revendications

1. Installation d'électrolyse (1) comprenant un électrolyseur sous pression (3) pour la production d'hydrogène (H₂) et d'oxygène (O₂) en tant que gaz produits à une pression nominale (P_{N}), avec une pluralité de cellules d'électrolyse présentant chacune deux demi-cellules séparées par une membrane perméable aux ions (5), de sorte que sont formés une chambre anodique (7) et une chambre cathodique (9), dans laquelle une conduite de produit oxygène (11B) est raccordée à la chambre anodique (7) du côté anodique et une conduite de produit hydrogène (11A) est raccordée à la chambre cathodique (9) du côté cathodique, dans laquelle la conduite de produit hydrogène (11A) débouche dans un premier séparateur de gaz (13A) et la conduite de produit oxygène (11B) débouche dans un second séparateur de gaz (13B), **caractérisée en ce que** :
un premier réservoir de gaz sous pression (25A) pour l'hydrogène (H₂) est raccordé à l'électrolyseur sous pression (3) du côté cathodique et un second réservoir de gaz sous pression (25B) pour l'oxygène (O₂) est raccordé du côté anodique, de sorte que du gaz sous pression peut être respectivement évacué des réservoirs de gaz sous pression (25A, 25B) et peut être acheminé vers l'électrolyseur sous pression (3) du côté cathodique et du côté anodique, dans laquelle la première conduite de prélèvement (27A) est raccordée au premier séparateur de gaz (13A) et la deuxième conduite de prélèvement (27B) est raccordée au second séparateur de gaz (13B), et dans laquelle le premier réservoir de gaz sous pression (25A) est raccordé à l'électrolyseur sous pression (3) par l'intermédiaire d'une première conduite de prélèvement (27A) et le second réservoir de gaz sous pression (25B) est raccordé par l'intermédiaire d'une deuxième conduite de prélèvement (27B), dans laquelle une robinetterie de réglage (29) commandable est montée dans une conduite de prélèvement (27A, 27B), de sorte qu'une pression amont (p₁, p₂) respective peut être réglée du côté cathodique et du côté anodique, et dans laquelle il est prévu un dispositif de régulation de pression différentielle (15) avec un capteur de pression différentielle (17) qui est raccordé à un point de mesure (19) respectif de la première conduite de prélèvement (27A) et de la deuxième conduite de prélèvement (27B), de sorte que la pression différentielle (Δp) entre la pression amont cathodique (p₁) et la pression amont anodique (p₂) peut être déterminée et régulée, de sorte qu'une pression amont (p₁, p₂) respective prédéfinie peut être réglée du côté cathodique et du côté anodique.

2. Installation d'électrolyse (1) selon la revendication 1, dans laquelle la première conduite de prélèvement (27A) est raccordée à la chambre cathodique (9) et la deuxième conduite de prélèvement (27B) est raccordée à la chambre anodique (7).

3. Installation d'électrolyse (1) selon la revendication 1 ou 2, dans laquelle le dispositif de régulation de pression différentielle (15) est conçu pour une limitation de pression différentielle, une valeur maximale pour la pression différentielle (Δpₘₐₓ) étant réglée.

4. Installation d'électrolyse (1) selon l'une des revendications précédentes, dans laquelle un capteur de pression (31) est disposé sur le premier séparateur de gaz (13A) et sur le second séparateur de gaz (13B).

5. Installation d'électrolyse (1) selon l'une des revendications précédentes, dans laquelle une première conduite d'éduit (21A) est raccordée à la chambre cathodique (9) du côté cathodique et une deuxième conduite d'éduit (21B) est raccordée à la chambre anodique (7) du côté anodique.

6. Installation d'électrolyse (1) selon l'une des revendications précédentes, dans laquelle la membrane perméable aux ions (5) est configurée sous la forme d'une membrane perméable aux protons, de sorte qu'une électrolyse PEM peut être mise en œuvre.

7. Installation d'électrolyse (1) selon l'une des revendications précédentes, dans laquelle la membrane perméable aux ions (5) est configurée sous la forme d'un diaphragme qui permet de manière sélective le passage d'ions hydroxyde, de sorte qu'une électrolyse alcaline peut être mise en œuvre.

8. Procédé de fonctionnement d'une installation d'électrolyse (1) selon l'une des revendications précédentes, dans lequel, lors d'une phase de démarrage, l'électrolyseur sous pression (3) est précontraint à une pression amont avec du gaz sous pression, de l'hydrogène (H₂) étant évacué du premier réservoir de gaz sous pression (25A) et acheminé vers l'électrolyseur sous pression (3) du côté cathodique, et de l'oxygène (O₂) étant évacué du second réservoir de gaz sous pression (25B) et acheminé vers l'électrolyseur sous pression (3) du côté anodique, une pression amont (p₁, p₂) respective prédéfinie étant réglée du côté cathodique et du côté anodique.

9. Procédé selon la revendication 8, dans lequel une pression différentielle (Δp) entre la pression amont anodique (p₂) et la pression amont cathodique (p₁) est mesurée, le signal de mesure étant lu dans le dispositif de régulation de pression différentielle (15) et comparé à une valeur de référence (Δpₘₐₓ) .

10. Procédé selon la revendication 8 ou 9, dans lequel de l'hydrogène (H₂) provenant du premier réservoir de gaz sous pression (25A) est acheminé vers le premier séparateur de gaz (13A) et de l'oxygène (O₂) provenant du second réservoir de gaz sous pression (25B) est acheminé vers le second séparateur de gaz (13B).

11. Procédé selon la revendication 8, 9 ou 10, dans lequel la pression amont cathodique (p₁) de l'hydrogène (H₂) est réglée de manière à être égale à la pression amont anodique (p₂) de l'oxygène (O₂).

12. Procédé selon la revendication 8, 9 ou 10, dans lequel la pression amont cathodique (p₁) de l'hydrogène (H₂) est réglée de manière à être supérieure à la pression amont anodique (p₂) de l'oxygène (O₂).

13. Procédé selon l'une des revendications 8 à 12, dans lequel, après que la pression amont (p₁, p₂) respective a été atteinte dans l'électrolyseur sous pression (3), le courant d'électrolyse est établi, de l'hydrogène (H₂) et de l'oxygène (O₂) étant produits en tant que gaz produits, une électrolyse sous pression étant mise en œuvre à une pression nominale (p_{N}).

14. Procédé selon la revendication 13, dans lequel une électrolyse sous pression est mise en œuvre à une pression nominale (p_{N}) d'au moins 30 bar.
